# FASCICULE DE BREVET EUROPEEN

(11) **EP 1 409 883 B1**
(45) Date de publication et mention de la délivrance du brevet: **15.03.2006**
(21) Numéro de dépôt: 02790194.1
(22) Date de dépôt: 15.07.2002
(51) Int. Cl.: F16C 35/073, F16C 25/08

(54) **PALIER A ROULEMENT DE COLONNE DE DIRECTION POUR VEHICULE AUTOMOBILE**
WÄLZLAGER FÜR KRAFTFAHRZEUGLENKSÄULE
MOTOR VEHICLE STEERING COLUMN ROLLING BEARING

(30) Priorité: 25.07.2001 FR 0109936
(43) Date de publication de la demande: 21.04.2004
(73) Titulaire: Aktiebolaget SKF, 415 50 Göteborg (SE)
(72) Inventeur: DELOS, Jacques, F-77500 Chelles (FR); MONTBOEUF, Bruno, 37390 Cerelles (FR)
(74) Mandataire: Casalonga, Axel
(86) Numéro de dépôt international: PCT/FR2002/002501
(87) Numéro de publication internationale: WO 2003/010441

(56) Documents cités:
- DE-A- 19 952 119
- DE-B- 1 259 148
- FR-A- 2 756 885

## Description

La présente invention relève du domaine des paliers à roulement, notamment pour colonnes de direction de véhicules automobiles.

Les colonnes de direction comprennent généralement un arbre dont une extrémité est solidaire d'un volant d'entraînement actionné par le conducteur du véhicule et dont l'autre extrémité est solidaire d'organes mécaniques destinés à assurer le positionnement angulaire des roues du véhicule. L'arbre de la colonne de direction est monté dans un logement de forme tubulaire fixe par l'intermédiaire de deux paliers à roulement, généralement à billes à contact oblique, montés en opposition.

Ces paliers à roulement comprennent généralement une bague extérieure solidaire du logement, une bague intérieure en contact avec l'arbre, chaque bague étant pourvue d'un chemin de roulement toroïdal, et une rangée d'éléments roulants disposés entre les deux chemins de roulement et en contact avec ceux-ci. On peut aussi prévoir une cage pour maintenir l'espacement circonférentiel régulier des éléments roulants. La cage est réalisée, par exemple en matériau synthétique moulé.

Ces paliers à roulement comprennent généralement des bagues de tolérance permettant un montage aisé du roulement sur un arbre sans serrage initial et de pouvoir réaliser ensuite la solidarisation entre la bague intérieure et l'arbre.

On connaît par le document FR 2 756 885 un palier à roulement pour colonnes de direction comprenant une bague de tolérance sous la forme d'une couronne interrompue par une fente axiale en contact avec la bague intérieure du roulement par une surface toroïdale. Une rondelle-frein, disposée du côté de la bague de tolérance opposé à la bague intérieure et servant à positionner le palier à roulement sur l'arbre de la colonne de direction, est maintenue axialement par rapport à la bague extérieure par des bossages en saillie vers l'intérieur formés sur une portion cylindrique de la bague extérieure et définissant un diamètre inférieur au diamètre d'une collerette de la rondelle frein. Une rondelle élastique du type ondulée disposée axialement entre la rondelle-frein et la bague de tolérance exerce un effort axial de précontrainte.

Néanmoins, un tel palier à roulement nécessite l'utilisation d'une rondelle-frein pour assurer la retenue axiale de la rondelle élastique et le positionnement du roulement sur l'arbre. Par ailleurs, l'effort axial de précontrainte transmis à la bague de tolérance doit permettre, par effet de coin avec la bague intérieure, la déformation radiale de la bague de tolérance en vue son serrage sur l'arbre de colonne. Or, la bague de tolérance possède une rigidité radiale relativement importante du fait de son épaisseur. Il faut donc appliquer un effort axial important pour obtenir une adaptation et un serrage convenable de la bague de tolérance sur l'arbre, plus important que l'effort axial de précontrainte du palier à roulement.

La présente invention concerne un palier à roulement comprenant une bague de tolérance pouvant être convenablement serrée sur un arbre en exerçant un effort axial réduit permettant la précontrainte du palier à roulement.

L'invention concerne également un palier à roulement utilisant un nombre de pièces limité et de coût faible, et permettant le positionnement du palier à roulement sur un arbre.

Un palier à roulement, notamment pour colonne de direction de véhicule automobile, selon l'invention, comprend une bague extérieure, une bague intérieure, au moins une rangée d'éléments roulants disposés entre des chemins de roulements des bagues intérieure et extérieure, une bague de tolérance assurant la liaison de la bague intérieure avec un arbre et une rondelle élastique axialement disposée entre une portion radiale de la bague intérieure et une surface de la bague de tolérance pour exercer un effort axial entre la portion radiale de la bague intérieure et la surface de la bague de tolérance. La rondelle élastique disposée entre la bague intérieure et la bague de tolérance peut exercer un effort axial de précontrainte directement sur la bague intérieure.

Avantageusement, la rondelle élastique et la bague de tolérance sont solidaires angulairement. A cet effet, la rondelle élastique peut comprendre des ergots en saillie dans des logements axiaux de la bague de tolérance.

Dans un mode de réalisation, la bague de tolérance comprend un manchon, et des patins radiaux s'étendant vers l'extérieur à partir d'une première extrémité du manchon, dans des secteurs angulaires déterminés, en étant séparées les uns des autres par des espaces circonférentiels, lesdits patins radiaux étant aptes à coopérer avec une surface intérieure de la bague intérieure. Les patins radiaux sont destinés à venir en contact avec la bague intérieure pour assurer le centrage et l'adaptation de la bague intérieure sur l'arbre.

Dans un mode de réalisation, le manchon comprend des ouvertures axiales s'étendant à partir de la première extrémité du manchon, dans le prolongement des espaces circonférentiels.

Selon une caractéristique de l'invention, les ouvertures s'étendent axialement au-delà des patins radiaux, en formant des zones de déformation privilégiées de moindre section du manchon. Les zones de déformation permettent une déformation radiale de la bague de tolérance par l'application d'un effort axial réduit permettant la précontrainte du palier à roulement.

Avantageusement, le manchon comprend des portions axiales de moindre épaisseur radiale situées dans le prolongement des espaces circonférentiels, diminuant la rigidité radiale de la bague de tolérance.

De préférence, le palier à roulement comprend des moyens de fixation mutuelle de la bague de tolérance et de la bague intérieure. A cet effet, la bague de tolérance peut comprendre des crochets de solidarisation axiale avec la bague intérieure. La fixation de la bague de tolérance sur la bague intérieure permet de retenir la rondelle élastique et d'obtenir un palier à roulement compact pouvant être manipulé par un opérateur sans risquer de perdre des pièces.

L'invention concerne également un ensemble mécanique comprenant un arbre et un palier à roulement comprenant une bague extérieure, une bague intérieure, au moins une rangée d'éléments roulants disposés entre des chemins de roulements des bagues intérieure et extérieure, une bague de tolérance assurant la liaison de la bague intérieure avec l'arbre et une rondelle élastique axialement disposée entre une portion radiale de la bague intérieure et une surface de la bague de tolérance pouvant exercer un effort axial entre la portion radiale de la bague intérieure et la surface de la bague de tolérance, la bague de tolérance venant en appui sur un chanfrein reliant deux portions de diamètres différents de l'arbre.

Les bagues de roulement peuvent être réalisées en tôle emboutie et subir un traitement thermique de durcissement.

La bague extérieure d'un palier à roulement est solidarisée avec le logement de la colonne de direction et la bague intérieure est montée sur l'arbre de colonne par l'intermédiaire de la bague de tolérance radialement déformable, par exemple réalisée en matière synthétique moulée. La bague de tolérance permet d'assurer le montage aisé du roulement sur l'arbre sans serrage initial et de pouvoir réaliser ensuite la solidarisation entre la bague intérieure et l'arbre, même lorsque leurs sections respectives ont des profils très différents, par exemple une bague intérieure ayant une forme de révolution et un arbre à section carrée. La bague de tolérance permet, en outre, de compenser en se déformant des défauts géométriques et des dispersions dimensionnelles des bagues et de l'arbre, et de transmettre à la bague intérieure l'effort axial de mise en précontrainte.

L'arbre peut avoir une section droite circulaire ou polygonale, par exemple carrée. L'alésage de la bague de tolérance est adapté à la section droite de l'arbre.

L'ensemble fonctionne à jeu nul grâce à un effort axial de précontrainte exercé sur la bague de tolérance par la rondelle élastique qui peut être éventuellement remplacée par tout organe élastique permettant d'exercer un effort axial de précontrainte du palier à roulement, tel qu'un un ressort par exemple.

Si la colonne est montée dans son logement par l'intermédiaire de deux paliers à roulement, l'effort axial de précontrainte peut être exercé sur un seul des deux paliers à roulement, le deuxième palier à roulement étant immobilisée axialement dans la direction de cet effort.

On rattrape ainsi les jeux internes des roulements et on assure le contact permanent sans jeu et sous précharge entre les bagues et les éléments roulants du palier à roulement.

Grâce à l'invention, on obtient un palier à roulement pouvant servir au montage d'une colonne de direction et utilisant un nombre limité de pièces. L'utilisation d'une rondelle-frein pour positionner le palier à roulement n'est plus indispensable.

La présente invention et ses avantages seront mieux compris à l'étude de la description détaillée d'un mode de réalisation pris à titre d'exemple non-limitatif et illustrée par les dessins annexés, sur lesquels :
La figure 1 est une vue de face en élévation d'un palier à roulement selon l'invention ;
La figure 2 est une vue en coupe axiale du palier à roulement de la figure 1 selon I-I ;
Les figures 3 et 4 sont des vues en perspective d'une bague de tolérance selon un aspect de l'invention ;
La figure 5 est une vue en perspective d'une rondelle élastique selon un aspect de l'invention ;
La figure 6 est une vue de côté en élévation de la rondelle de la figure 5 ; et
La figure 7 est une vue en coupe axiale du palier à roulement de la figure 1 monté sur un arbre.

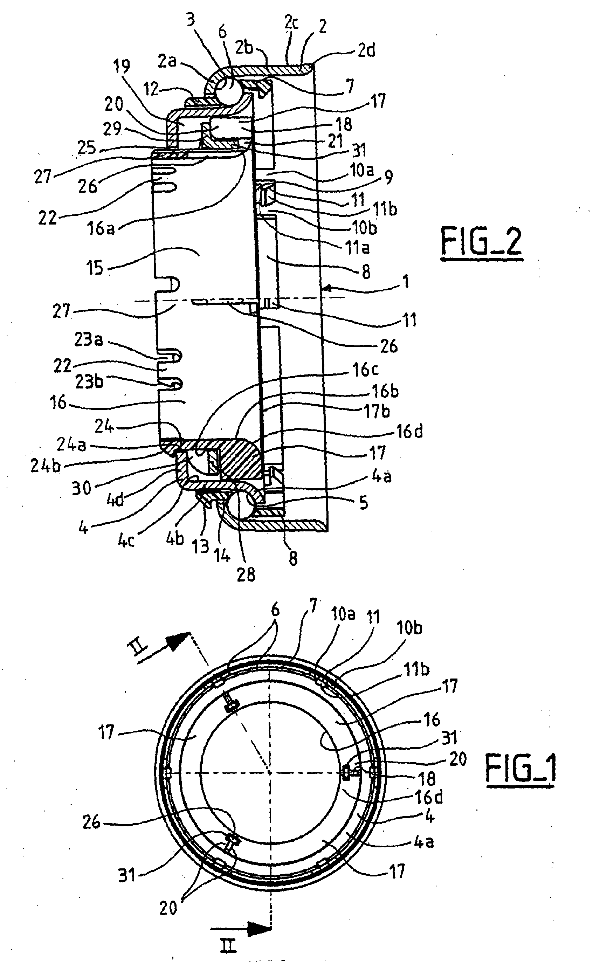

Tel que représenté sur les figures 1 et 2, un palier à roulement 1 à contact oblique comprend une bague extérieure 2 en tôle emboutie définissant un chemin de roulement 3, une bague intérieure 4 en tôle emboutie définissant un chemin de roulement 5, des éléments roulants 6, ici des billes, disposés entre les chemins de roulement 3, 5 des bagues extérieure 2 et intérieure 4, et maintenus circonférentiellement espacés par une cage 7.

La bague extérieure 2 comprend une portion toroïdale 2a dont la surface interne forme le chemin de roulement 3, une portion cylindrique 2b s'étendant à partir de la portion toroïdale 2a et pourvue d'une surface externe 2c, et une collerette 2d s'étendant radialement vers l'extérieur à partir de l'extrémité libre de la portion cylindrique 2b.

La bague intérieure 4 comprend une portion toroïdale 4a dont la surface externe, orientée vers le chemin de roulement 3, forme le chemin de roulement 5, une portion axiale cylindrique 4b s'étendant à partir de la portion toroïdale 4a axialement du côté opposé à la portion cylindrique 2b de la bague extérieure 2, la portion cylindrique 4b étant pourvue d'un alésage 4c, et une collerette annulaire 4d s'étendant radialement vers l'intérieur à partir du bord libre de la portion cylindrique 4b.

La cage 7 comprend une première portion tubulaire 8 s'étendant axialement entre la portion toroïdale 4a de la bague intérieure 4 et la portion cylindrique 2b de la bague extérieure 2. La portion tubulaire 8 comprend des pattes 9 élastiques radialement, au nombre de six dans l'exemple illustré, chacune formée entre deux ouvertures 10a, 10b s'étendant axialement à partir du bord libre de la portion tubulaire 8, pourvues à leur extrémité libre de crochets 11 en saillie radialement vers l'intérieur, comprenant une surface radiale 11a orientée vers les éléments roulants 6 et une surface inclinée 11a opposée, orientée vers l'intérieur. Les crochets 11 définissent un diamètre inférieur au diamètre extérieur de la portion toroïdale 4a de la bague intérieure 4.

La cage 7 comprend une seconde portion tubulaire 12 similaire, s'étendant axialement entre la portion toroïdale 2a de la bague extérieure 2 et la portion cylindrique 4b de la bague intérieure 4, et pourvue de crochets 13 en saillie vers l'extérieur à partir d'extrémités de bords libres de pattes 14 élastiques radialement, et définissant un diamètre supérieur au diamètre intérieur de la portion toroïdale 2a de la bague extérieure 2.

Les crochets 11, 13 de la cage 7 permettent de retenir axialement la cage 7 sur les bague intérieure 4 et extérieure 2. Lors du montage du palier à roulement 1, on dispose les éléments roulants 6 dans la cage 7, on introduit axialement la bague intérieure 4 dans un sens jusqu'à l'encliquetage provoqué par les crochets 11 interdisant un mouvement axial inverse, puis on introduit axialement l'ensemble dans la bague intérieure 2 jusqu'à l'encliquetage provoquer par les crochets 13 interdisant un mouvement axial inverse. On obtient ainsi un palier à roulement dont les pièces sont solidaires axialement entre elles, pouvant être manipulé sans risquer de perdre des pièces, et obtenu par un montage facile.

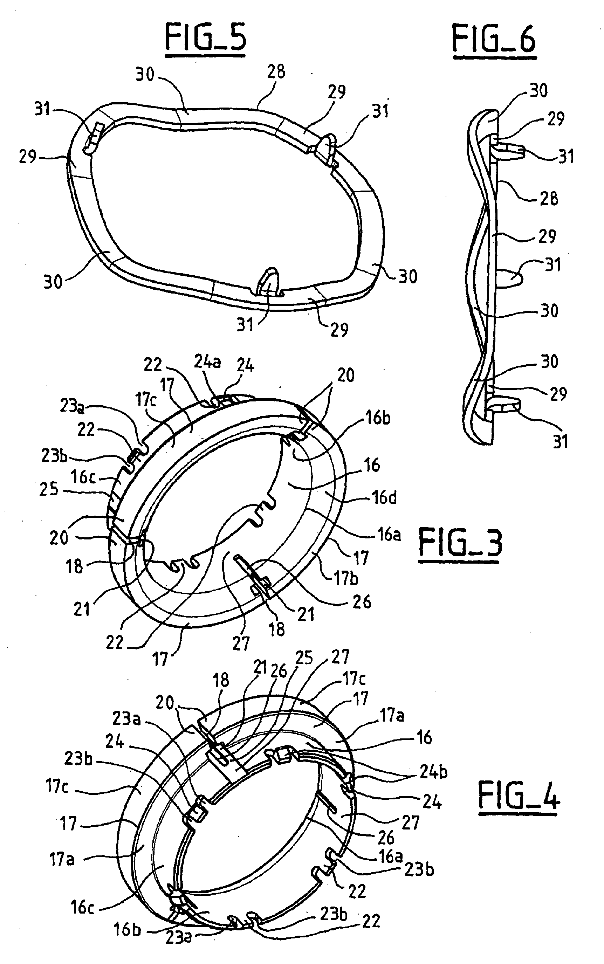

Sur les figures 1 à 4, le palier à roulement 1 comprend une bague de tolérance 15 réalisée en matériau synthétique, et pouvant être obtenue par moulage, comprenant un manchon 16, et une pluralité de patins 17, au nombre de trois dans l'exemple illustré, s'étendant radialement vers l'extérieur, à partir d'une première extrémité axiale 16a du manchon 16, dans des secteurs angulaires déterminés, en étant séparés les uns des autres par des espaces circonférentiels 18.

Le manchon 16 est disposé axialement dans la bague intérieure 4 en étant entouré par la collerette annulaire 4d. Les patins 17 s'étendent vers la bague intérieure 4 en définissant un espace annulaire 19 situé radialement entre le manchon 16 et la portion cylindrique 4b, et axialement entre la collerette 4d et les patins 17. Les patins 17 comprennent une surface radiale 17a orientée vers l'espace annulaire 19, une paroi radiale 17b opposée, et une paroi externe cylindrique 17c destinée à venir en contact avec l'alésage 4c de la portion cylindrique 4b.

Des prolongements 20 s'étendent dans les espaces circonférentiels 18 à partir des zones de plus grand diamètre des patins 17, en formant des logements axiaux 21, sans fermer complètement les espaces circonférentiels 18.

Le manchon 16 comprend une surface extérieure 16c et un alésage 16b relié à la surface radiale 17b des patins 17 par un chanfrein 16d à profil toroïdal.

Des pattes 22 élastiques radialement, au nombre de six dans l'exemple illustré, sont chacune formées entre deux ouvertures 23a, 23b s'étendant axialement à partir du bord libre de manchon 16, en étant pourvues de crochets 24 en saillie vers l'extérieur, comprenant une surface radiale 24a orientée vers la collerette 4d opposée à une surface inclinée vers l'extérieur 24b. Les crochets 24 définissant un diamètre supérieur au diamètre intérieur de la collerette 4d sont destinés à s'encliqueter avec la collerette 4d pour assurer la retenue axiale de la bague de tolérance 15.

Le manchon 16 comprend des portions axiales 25 de moindre épaisseur radiale situées dans le prolongement des espaces circonférentiels 18 et des ouvertures axiales 26 s'étendant à partir de la première extrémité axiale 16a du manchon 16, dans le prolongement des espaces circonférentiels 18. Les ouvertures axiales 26 laissent intactes des zones 27 de moindre section du manchon 16.

Tel que représenté sur les figures 1, et 2, et 5, et 6, une rondelle élastique de précontrainte 28 du type ondulée comprend des portions radiales 29, au nombre de 3, reliées par des portion ondulées 30 en saillie d'un premier côté du plan radial contenant les portions radiales 29 chacune pourvue d'un ergot 31 en saillie axiale du côté opposé, et formé par pliage à partir du bord interne des portions radiales 29.

La rondelle élastique 28 est disposée sur le manchon 16, dans l'espace annulaire 19, en se situant entre la collerette 4d et la surface radiale définie par l'ensemble des surfaces radiales 17a des patins 17. Les portions ondulées 30 viennent en contact avec la collerette 4d, les portions radiales 29 venant en contact sur les surfaces radiales 17a. Les ergots 31 viennent en saillie dans chacun des logements axiaux 21 définis dans les espaces circonférentiels 18, pour solidariser angulairement la rondelle élastique 28 avec la bague de tolérance 15.

Les crochets 24 forment un moyen de fixation de la bague de tolérance 15 sur la bague intérieure 4 en retenant axialement la bague de tolérance 15, tout en permettant une introduction facile du manchon 16 de la bague de tolérance 15 axialement à travers la collerette 4d. Lors du montage du palier à roulement 1, on dispose la rondelle élastique 28 sur la surface extérieure 16c du manchon 16, puis on introduit axialement le manchon 16 de la bague de tolérance 15 à travers la collerette 4d. Lors du mouvement axial, les surfaces inclinées 24b viennent en contact sur le bord intérieur de la collerette 4d en provoquant la déformation radialement vers l'intérieur des pattes 23, jusqu'à la libération des pattes 23, les crochets 24 interdisant dès lors un mouvement axial inverse.

Ainsi, on obtient facilement un palier à roulement par des étapes d'assemblage simples, formant un ensemble indémontable, pouvant être manipulé par un opérateur sans risquer de perdre des pièces.

Comme illustré sur la figure 1, on peut prévoir un manchon 16 possédant une longueur axiale suffisante de sorte que la rondelle élastique 28 est disposée dans l'espace annulaire 19 avec une faible déformation ou pas de déformation, les patins 17 se situant axialement à l'extérieur de l'alésage 4c de la bague intérieure 4. On choisit une rondelle élastique 28 pouvant transmettre un effort axial suffisant de précontrainte du palier à roulement 1 lors de sa déformation axiale dans l'espace annulaire 19.

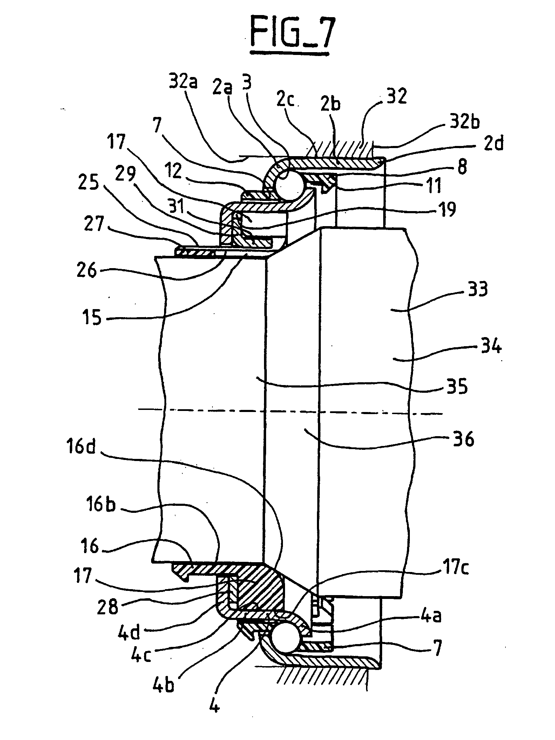

Sur la figure 7, le palier à roulement 1 est monté entre un logement fixe 32 comprenant un alésage 32a et une surface frontale 32b, et un arbre tournant 33 comprenant une première portion 34 de grand diamètre et une seconde portion 35 de petit diamètre, reliées par un chanfrein oblique 36.

La surface extérieure 2c de la portion cylindrique de la bague extérieure 2 est en contact avec l'alésage 32a du logement fixe 32, et la collerette 2d est en contact avec la surface frontale 32b et sert de butée de positionnement axial.

L'alésage 16b du manchon 16 est monté sur la seconde portion 34 de l'arbre tournant 33 avec un certain jeu radial, et le chanfrein 36 et en contact avec le chanfrein 16d du manchon 16. Lors du montage, le palier à roulement 1 est positionné dans le logement fixe 32. L'arbre tournant 33 est introduit dans le manchon 16 en venant exercer un effort axial. Le contact oblique entre la bague de tolérance 15 et l'arbre 33 provoque la transmission à la bague de tolérance 15 d'un effort axial et, par effet de coin, un effort radial.

Sous l'effort axial, la rondelle élastique 28 se déforme axialement, la bague de tolérance 15 coulissant axialement par rapport à la bague intérieure 4, les patins 17 venant en contact avec l'alésage 4c de la portion cylindrique 4b de la bague intérieure 4, en se rapprochant axialement de la collerette 4d.

Sous l'effort radial, la bague de tolérance se déforme radialement et vient serrer sur l'alésage 4c de la portion cylindrique 4b. La déformation de la bague de tolérance 15 est principalement localisée dans les zones 27 de moindre rigidité qui se déforment pour permettre l'expansion radiale des patins 17. L'expansion radiale de la bague de tolérance 15 est douce et ne demande qu'un faible effort axial dans la mesure où la portion de forte épaisseur est divisée en patins 17 s'articulant autour des zones 27 de moindre épaisseur. La rigidité radiale de la bague de tolérance 15 est encore diminuée par le fait que les zones 27 sont formées sur les portions axiales 25 de moindre épaisseur ce qui diminue encore la section de zones 27. On pourrait renforcer encore l'efficacité du serrage de la bague de tolérance dans la bague intérieure 4 du roulement en utilisant une portion axiale 4b et un alésage 4c très légèrement coniques.

La bague de tolérance 15 s'adapte facilement aux variations dimensionnelles diamétrales de l'arbre 33 et de la bague intérieure 4, dues aux tolérances de fabrication et assure par élasticité la liaison entre la bague intérieure 4 et l'arbre 33. La bague de tolérance permet en outre de compenser des défauts de coaxialité du logement fixe 32 et de l'arbre 33. La longueur du manchon 16 traversé par l'arbre 33 peut être adaptée pour permettre un guidage convenable de l'arbre 33.

La rondelle élastique 28 disposée dans l'espace annulaire 19 exerce un effort axial entre les patins 17 et la collerette 4d de la bague intérieure 4 permettant la précontrainte du palier à roulement 1 à contact oblique. La déformation de la rondelle élastique 28 permet aux patins 17 de venir en contact avec l'alésage 4c de la portion cylindrique 4b par leur surface extérieure 17c.

L'introduction de l'arbre 33 entraînant la déformation de la bague de tolérance 15, qui vient s'adapter à la bague intérieure 4 tout en coulissant dans l'alésage d'un portion cylindrique 4b de la bague intérieure 4, permet d'obtenir un centrage de l'arbre 33 par rapport au logement fixe 32 et une transmission d'efforts axiaux et radiaux entre l'arbre tournant 33 et le logement fixe 32.

Grâce à l'invention, on obtient un palier à roulement pouvant être utilisé dans un dispositif de montage d'une colonne de direction, possédant une bague de tolérance pouvant être déformée radialement en exerçant un effort axial réduit de précontrainte du palier à roulement. Le palier à roulement obtenu comprend un nombre limité de pièces pouvant être montées facilement par encliquetage pour obtenir un ensemble indémontable, comprenant en outre une rondelle de précontrainte intégrée, de sorte qu'un opérateur ne risque pas de perdre de pièces lors d'une manipulation. En outre, le montage du palier à roulement s'effectue par des opérations simple.

## Revendications

1. Palier à roulement (1), notamment pour colonne de direction de véhicule automobile, comprenant une bague extérieure (2), une bague intérieure (4), au moins une rangée d'éléments roulants (6) disposés entre des chemins de roulements (3, 5) des bagues intérieure (4) et extérieure (2), une bague de tolérance (15) assurant la liaison de la bague intérieure (4) avec un arbre (32), **caractérisé par le fait qu'**il comprend une rondelle élastique (28) axialement disposée entre une portion radiale (4d) de la bague intérieure (4) et une surface (17a) de la bague de tolérance (15) pour exercer un effort axial entre la portion radiale (4d) de la bague intérieure (4) et la surface (17a) de la bague de tolérance (15).

2. Palier selon la revendication 1, **caractérisé par le fait que** la rondelle élastique (28) et la bague de tolérance (15) sont solidaires angulairement.

3. Palier selon la revendication 2, **caractérisé par le fait que** la rondelle élastique (28) comprend des ergots (31) en saillie dans des logements axiaux (21) de la bague de tolérance (15).

4. Palier selon l'une quelconque des revendications précédentes, **caractérisé par le fait que** la bague de tolérance (15) comprend un manchon (16), et des patins radiaux (17) s'étendant vers l'extérieur à partir d'une première extrémité (16a) du manchon (16), dans des secteurs angulaires déterminés, en étant séparés les uns des autres par des espaces circonférentiels (18), lesdits patins radiaux étant aptes à coopérer avec une surface intérieure 4c de la bague intérieure 4.

5. Palier selon la revendication 4, **caractérisé par le fait que** le manchon (16) comprend des ouvertures axiales (26) s'étendant à partir de la première extrémité (16a) du manchon (16), dans le prolongement des espaces circonférentiels (18).

6. Palier selon la revendication 5, **caractérisé par le fait que** les ouvertures axiales (26) s'étendent au-delà des patins radiaux (17), en formant des zones (27) de déformation privilégiées de moindre section du manchon (16).

7. Palier selon l'une quelconque des revendications précédentes 4 à 6, **caractérisé par le fait que** le manchon (16) comprend des portions axiales (25) de moindre épaisseur radiale situées dans le prolongement des espaces circonférentiels (18).

8. Palier selon l'une quelconque des revendications précédentes, **caractérisé par le fait qu'**il comprend des moyens de fixation de la bague de tolérance (15) et de la bague intérieure (4).

9. Palier selon la revendication 8, **caractérisé par le fait que** la bague de tolérance (15) comprend des crochets (24) de retenue axiale avec la bague intérieure (4).

10. Ensemble mécanique comprenant un arbre tournant (33) et un palier à roulement (1) comprenant une bague extérieure (2), une bague intérieure (4), au moins une rangée d'éléments roulants (6) disposés entre des chemins de roulements (3, 5) des bagues intérieure (4) et extérieure (2), une bague de tolérance (15) assurant la liaison de la bague intérieure (4) avec l'arbre (33), **caractérisé par le fait qu'**il comprend une rondelle élastique (28) axialement disposée entre une portion radiale (14d) de la bague intérieure (4) et une surface (17a) de la bague de tolérance (15) pour exercer un effort axial entre la portion radiale (4d) de la bague intérieure (4) et la surface (17a) de la bague de tolérance (15), la bague de tolérance (15) venant en appui sur un chanfrein (36) reliant deux portions (34, 35) de diamètres différents de l'arbre (33).

## Patentansprüche

1. Wälzlager (1), insbesondere für Lenksäulen von Kraftfahrzeugen, mit einem Außenring (2), mit einem Innenring (4), mit wenigstens einer Reihe von Wälzkörpern (6), die zwischen Laufbahnen (3, 5) des Innenrings (4) und des Außenrings (2) angeordnet sind, und mit einem Ausgleichsring (15), der die Ausrichtung des Innenrings (4) gegenüber einer Welle (32) bewirkt, **dadurch gekennzeichnet, dass** eine elastische Scheibe (28) vorgesehen ist, die zwischen einem radialen Flansch (4d) des Innenrings (4) und einer Fläche (17a) des Ausgleichsrings (15) angeordnet ist, um eine Axialkraft zwischen dem radialen Flansch (4d) des Innenrings (4) und der Fläche (17a) des Ausgleichsrings (15) zu erzeugen.

2. Lager nach Anspruch 1, **dadurch gekennzeichnet, dass** die elastische Scheibe (28) und der Ausgleichsring (5) in Umfangsrichtung gegeneinander festgelegt sind.

3. Lager nach Anspruch 2, **dadurch gekennzeichnet, dass** die elastische Scheibe (28) Zapfen (31) aufweist, die in axiale Ausnehmungen (21) des Ausgleichsrings (15) eingreifen.

4. Lager nach einem der vorhergehenden Ansprüche, **dadurch gekennzeichnet, dass** der Ausgleichsring (15) eine Manschette (16) und radiale Anlagestücke (17) aufweist, die sich ausgehend von einem ersten Ende (16a) der Manschette (16) längs vorbestimmter Winkelbereiche nach Außen erstrecken, wobei sie voneinander durch in Umfangsrichtung liegende Zwischenräume (18) voneinander getrennt sind und die Anlagestücke dazu eingerichtet sind, mit einer Innenfläche (4c) des Innenrings (4) zusammenzuwirken.

5. Lager nach Anspruch 4, **dadurch gekennzeichnet, dass** die Manschette (16) axiale Öffnungen (26) aufweist, die ausgehend von dem ersten Ende (16a) der Manschette (16) in Verlängerung der in Umfangsrichtung verlaufenden Zwischenräume (18) verlaufen.

6. Lager nach Anspruch 5, **dadurch gekennzeichnet, dass** die axialen Öffnungen (26) sich über die radialen Anlagestücke (17) hinaus erstrecken, wobei sie bevorzugt deformierbare Bereiche (27) mit geringerem Querschnitt als die Manschette (16) bilden.

7. Lager nach einem der Ansprüche 4 bis 6, **dadurch gekennzeichnet, dass** die Manschette (16) axiale Bereiche (25) mit verminderter radialer Dicke aufweist, die in Verlängerung der in Umfangsrichtung liegenden Zwischenräume (18) verlaufen.

8. Lager nach einem der vorhergehenden Ansprüche, **dadurch gekennzeichnet, dass** es Befestigungsmittel für den Ausgleichsring (15) und den Innenring (4) aufweist.

9. Lager nach Anspruch 8, **dadurch gekennzeichnet, dass** der Ausgleichsring (15) axiale Befestigungshaken (24) für den Innenring (4) aufweist.

10. Mechanische Anordnung mit einer umlaufenden Welle (33) und einem Wälzlager (1), zu dem ein Außenring (2), ein Innenring (4), wenigstens eine Reihe von Wälzkörpern (6), die zwischen den Laufbahn (3, 5) des Innenrings (4) und des Außenrings (2) angeordnet sind, und ein Ausgangsring (15) gehören, der die Ausrichtung des Innenrings (4) gegenüber der Welle (33) bewirkt, **dadurch gekennzeichnet, dass** eine elastische Scheibe (28) in axialer Richtung zwischen einem radialen Flansch (14d) des Innenrings (4) und einer Fläche (17a) des Ausgleichsrings (15) angeordnet ist, um eine Axialkraft zwischen dem radialen Flansch (4d) des Innenrings (4) und der Fläche (17a) des Ausgleichsrings (15) zu erzeugen, wobei der Ausgleichsring (15) an einer Kegelstumpffläche (36) anliegt, die zwei Abschnitte (34, 35) der Welle (33) mit unterschiedlichem Durchmesser miteinander verbindet.

## Claims

1. A rolling bearing (1) particularly for a motor vehicle steering column, comprising an outer ring (2), an inner ring (4), at least one row of rolling elements (6) arranged between raceways (3, 5) of the inner (4) and outer (2) rings, a tolerance ring (15) providing the connection between the inner ring (4) and a shaft (32), **characterized in that** it comprises an elastic washer (28) arranged axially between a radial portion (4d) of the inner ring (4) and a surface (17a) of the tolerance ring (15) in order to exert axial force between the radial portion (4d) of the inner ring (4) and the surface (17a) of the tolerance ring (15).

2. The bearing as claimed in claim 1, **characterized in that** the elastic washer (28) and the tolerance ring (15) are secured together in terms of angular movement.

3. The bearing as claimed in claim 2, **characterized in that** the elastic washer (28) comprises lugs (31) projecting into axial housings (21) belonging to the tolerance ring (15).

4. The bearing as claimed in any one of the preceding claims, **characterized in that** the tolerance ring (15) comprises a sleeve (16) and radial shoes (17) extending outward from a first end (16a) of the sleeve (16), in determined angular sectors, separated from one another by circumferential spaces (18), said radial shoes being able to collaborate with an interior surface 4c of the inner ring 4.

5. The bearing as claimed in claim 4, **characterized in that** the sleeve (16) comprises axial openings (26) extending from the first end (16a) of the sleeve (16), in the continuation of the circumferential spaces (18).

6. The bearing as claimed in claim 5, **characterized in that** the axial openings (26) extend beyond the radial shoes (17), forming regions (27) of smaller cross section of the sleeve (16) where deformation is encouraged.

7. The bearing as claimed in any one of the preceding claims 4 to 6, **characterized in that** the sleeve (16) comprises axial portions (25) of smaller radial thickness, situated in the continuation of the circumferential spaces (18).

8. The bearing as claimed in any one of the preceding claims, **characterized in that** it comprises means for fixing the tolerance ring (15) and the inner ring (4).

9. The bearing as claimed in claim 8, **characterized in that** the tolerance ring (15) comprises hooks (24) for axial retention with the inner ring (4).

10. A mechanical assembly comprising a rotating shaft (33) and a rolling bearing (1) comprising an outer ring (2), an inner ring (4), at least one row of rolling elements (6) arranged between raceways (3, 5) of the inner (4) and outer (2) rings, a tolerance ring (15) providing the connection between the inner ring (4) and the shaft (33), **characterized in that** it comprises an elastic washer (28) arranged axially between a radial portion (14d) of the inner ring (4) and a surface (17a) of the tolerance ring (15) so as to exert axial force between the radial portion (4d) of the inner ring (4) and the surface (17a) of the tolerance ring (15), the tolerance ring (15) resting against a chamfer (36) connecting two portions (34, 35) of the shaft (33) that have different diameters.
